# EUROPEAN PATENT APPLICATION

(11) **EP 4 545 152 A1**
(43) Date of publication of application: **30.04.2025**
(21) Application number: 22955482.9
(22) Date of filing: 27.09.2022
(51) Int. Cl.: A62C 3/16, A62C 31/02, A62C 31/28, A62C 37/40, B65G 1/00

(54) **WAREHOUSING SYSTEM**

(30) Priority: 18.08.2022 CN 202222177015 U
(71) Applicant: Contemporary Amperex Technology (Hong Kong) Limited, Hong Kong (HK)
(72) Inventor: HUANG, Fangyu, Ningde, Fujian 352100 (CN); ZHAO, Jiayi, Ningde, Fujian 352100 (CN)
(74) Representative: Gong, Jinping
(86) International application number: PCT/CN2022/121684
(87) International publication number: WO 2024/036707

(57) **Abstract**

The present application relates to a warehousing system, including a shelf (100) and fireproof partition plates (200). The fireproof partition plates (200) are detachably arranged inside the shelf (100) and divide the interior of the shelf (100) into a plurality of zones (102), and there are a plurality of compartments (101) in each zone (102). **In** the above warehousing system, the fireproof partition plates (200) are detachably arranged inside the shelf (100), and the interior of the shelf 100 is divided into a plurality of zones (102). When a fire occurs in a certain zone (102), the fire can be prevented from spreading rapidly in a short time; and there are a plurality of compartments (101) in each zone (102), thereby improving the situation that a larger shelf space is required for providing fireproof partition plates (200) in each compartment (101), and increasing the space utilization rate of the shelf (100).

## Description

### Cross-Reference to Related Applications

The present application refers to Chinese Patent Application No. 202222177015.8, filed on August 18, 2022, and entitled "WAREHOUSING SYSTEM", which is incorporated herein by reference in its entirety.

### Technical Field

The present application relates to the technical field of traction batteries, and more particularly to a warehousing system.

### Background Art

With the advance of new energy resources in recent years, traction batteries are widely applied thanks to their advantages of high energy, high battery voltage, a wide operating temperature range, long storage life, etc.

During the transfer and storage of traction batteries, one shelf is required to store a plurality of batteries or other materials with potential fire risks. When the materials stored on the shelf are on fire, it is required to extinguish the fire on the materials so as to avoid explosion due to excessive combustion of the materials. In some cases, the burning materials in one compartment of the shelf will affect other materials, and causes a plurality of materials to catch fire together, resulting in fire that cannot be quickly controlled, and excessive material damage.

### Summary of the Invention

In view of this, the present application discloses a warehousing system.

The warehousing system includes a shelf and fireproof partition plates. The fireproof partition plates are detachably arranged inside the shelf and divide the interior of the shelf into a plurality of zones, and there are a plurality of compartments in each zone. In the above-mentioned warehousing system, the fireproof partition plates are detachably arranged inside the shelf , and the interior of the shelf is divided into a plurality of zones. When a fire occurs in a certain zone, the fire can be prevented from spreading rapidly in a short time; and there are a plurality of compartments in each zone, thereby improving the situation that a larger shelf space is required for providing fireproof partition plates in each compartment, and increasing the space utilization rate of the shelf.

In some of embodiments, the fireproof partition plates include a plurality of first partition plates and several second partition plates, all the second partition plates are arranged on a back side of the shelf, and all the first partition plates are distributed in a staggered manner in the shelf to define a plurality of zones. In this way, all the first partition plates are distributed in the shelf in a staggered manner to define a plurality of zones, such that a fire can be prevented from spreading rapidly in a short time; and all the second partition plates are arranged on the back side of the shelf, so as to enhance a fire-proof effect while meeting the mechanical strength.

In some of the embodiments, a fire-resistant adhesive is applied at connections between the second partition plates and the shelf, and connections between the first partition plates and the shelf. In this way, the connections between the second partition plates and the shelf and the connections between the first partition plates and the shelf are sealed by means of the fire-resistant adhesive, so as to ensure the airtightness of the compartments in the zone to achieve the effect of smoke prevention and reduce the interference with the zone from other zones.

In some of the embodiments, the plurality of compartments in the same zone are arranged in a rectangular array, and all the compartments in the same column share a fire extinguishing device in a height direction of the shelf. In this way, when a material in a certain zone catches a fire, the fire extinguishing device can prevent the fire from spreading rapidly in a short time. All the compartments in the same column share a fire extinguishing device, so it is unnecessary to provide a fire extinguishing device for each compartment, thereby reducing the number of fire extinguishing devices and the costs while effectively preventing fires.

In some of the embodiments, there are at least two compartments in each column in the height direction of the shelf, and in the same column, the fire extinguishing device is arranged in the compartment at the highest position. In this way, in the height direction of the shelf, the fire extinguishing device is arranged in the highest compartment in the same column, and the fire of each compartment in the same column can be prevented by means of a fire extinguishing device, thereby optimizing the arrangement of the fire extinguishing device, and reducing the number of fire extinguishing devices and further reducing the costs.

In some of the embodiments, the fire extinguishing device includes a control unit, a sprinkler and a smoke sensor that are electrically connected. The smoke sensor is configured to detect smoke and generate a corresponding smoke feedback signal, and the control unit controls the ON and OFF of the sprinkler based on the smoke feedback signal. In this way, when the smoke sensor detects that there is a fire, the sprinkler can be automatically switched on to extinguish the fire timely, so as to prevent the fire from spreading rapidly in a short time.

In some of the embodiments, the fire extinguishing device further includes a temperature sensor electrically connected to the control unit. The temperature sensor is configured to measure temperature and generate a corresponding temperature feedback signal, and the control unit controls the ON and OFF of the sprinkler based on the temperature feedback signal. In this way, the control unit can control the ON and OFF of the sprinkler based on the real-time temperature, achieving automatic control and facilitating energy saving.

In some of the embodiments, a fire fighting access is provided in the middle of the shelf and/or on either side of the shelf, a fire exit door is provided at the fire fighting access, and the control unit controls opening and closing of the fire exit door based on the smoke feedback signal and/or the temperature feedback signal. In this way, in the case of a fire, personnel can quickly escape to a safe area through the fire fighting access.

In some of the embodiments, the warehousing system further includes primary temperature control air ducts and secondary temperature control air ducts that are in communication with each other, the primary temperature control air ducts are arranged on two opposite sides of the shelf, the primary temperature control air ducts extend in the height direction of the shelf, and the secondary temperature control air ducts are perpendicular to the primary temperature control air ducts. In this way, the temperature control airflow is diverted to each secondary temperature control air duct by means of the primary temperature control air ducts, and then evenly distributed to each zone of the shelf by the secondary temperature control air ducts, which can effectively ensure the storage temperature of materials.

In some of the embodiments, the secondary temperature control air ducts are located in the middle of the shelf and at the bottom of the shelf. In this way, in the height direction of the shelf, the secondary temperature control air ducts are located in the middle of the shelf and at the bottom of the shelf, and it is unnecessary to provide a secondary temperature control air duct at the top of the shelf. The demand for temperature control can be met by the primary temperature control air ducts and the secondary temperature control air ducts, which further achieve energy saving.

In some of the embodiments, each of the fireproof partition plates includes a lining and a shell, the lining and/or the shell are made of a fireproof material, and the shell surrounds an outer periphery of the lining. In this way, it is beneficial to enhancing the fireproof performance of the fireproof partition plates.

In some of the embodiments, the lining is a silicate plate, and the shell is made of iron. In this way, the fireproof partition plates have a better fireproof performance.

### Brief Description of the Drawings

FIG. 1 is a schematic diagram of a warehousing system according to an embodiment of the present application;
FIG. 2 is a partial enlarged view of part A of FIG. 1; and
FIG. 3 is a schematic diagram of a battery according to an embodiment of the present application.

### List of reference numerals:

20 - Battery; 21 - Case; 21a - First portion; 21b - Second portion; 22 - Battery cell; 100 - Shelf; 101 - Compartment; 102 - Zone; 200 - Fireproof partition plate; 210 - First partition plate; 220 - Second partition plate; 300 - Fire extinguishing device; 310 - Sprinkler; 320 - Smoke sensor; 330 - Temperature sensor; 400 - Primary temperature control air duct; 500 - Secondary temperature control air duct; 600 - Fire fighting access.

### Detailed Description of Embodiments

In order to make the above objectives, features and advantages of the present application more clearly understood, particular embodiments of the present application will be described in detail below with reference to the accompanying drawings. In the following description, numerous specific details are set forth in order to provide a thorough understanding of the present application. However, the present application can be implemented in many other ways different from those described herein, and those skilled in the art can make similar improvements without departing from the essence of the present application. Therefore, the present application is not limited by the particular embodiments disclosed below.

In the description of the present application, it should be understood that the orientation or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and simplification of the description, rather than indicating or implying that the devices or elements referred to must have a specific orientation or be constructed and operated in a described orientation, and therefore cannot be construed as limiting the present application.

In addition, the terms "first" and "second" are used for descriptive purposes only, and cannot be construed as indicating or implying relative importance or implicitly indicating the number of technical features indicated. Therefore, the features defined with "first" and "second" may explicitly or implicitly include at least one of the features. In the description of the present application, the meaning of "a plurality of" is at least two, such as two, three and so on, unless otherwise specifically defined.

In the present application, unless otherwise explicitly specified and defined, the terms such as "mounting", "connection", "connected" and "fixing" should be interpreted broadly, for example, either fixed or detachable connection, or integration; or may be a mechanical connection or an electrical connection; or may be a direct connection or an indirect connection through an intermediate medium, or may be communication between interiors of two elements or interaction between two elements, unless it may be clearly defined otherwise. For those of ordinary skill in the art, the specific meanings of the foregoing terms in the present application may be understood according to specific circumstances.

In the present application, unless otherwise explicitly specified and defined, the expression of a first feature being "on" or "under" a second feature may be the case that the first feature is in direct contact with the second feature, or the first feature is in indirect contact with the second feature via an intermediate medium. Moreover, the first feature being "on", "above", and "over" the second feature may be the first feature being directly above or obliquely above the second feature, or simply mean that the first feature is at a higher level than the second feature. The first feature being "under", "below" and "underneath" the second feature may be the first feature being right below or obliquely below the second feature, or only means that the level height of the first feature being less than that of the second feature.

It should be noted that when an element is referred to as being "fixed to" or "provided on" a further element, it may be directly on the further element, or there may be an intermediate element. When an element is referred to as being "connected" to a further element, it may be directly connected to the further element, or there may be an intermediate element. The terms "vertical", "horizontal", "upper", "lower", "left", "right" and similar expressions used herein are for illustrative purposes only but do not represent any unique implementation.

With the advance of new energy resources in recent years, traction batteries are widely applied thanks to their advantages of high energy, high battery voltage, a wide operating temperature range, long storage life, etc.

During the transfer and storage of traction batteries, one shelf is required to store a plurality of batteries or other materials with potential fire risks. When the materials stored on the shelf are on fire, it is required to extinguish the fire on the materials so as to avoid explosion due to excessive combustion of the materials. In some cases, the burning materials in one compartment of the shelf will affect other batteries and cause a plurality of materials to catch fire together, resulting in fire that cannot be quickly controlled, and excessive material damage.

In view of the above considerations, after intensive study, a warehousing system is designed, fireproof partition plates are detachably arranged inside the shelf, and the interior of the shelf is divided into a plurality of zones. When a fire occurs in a certain zone, the fire can be prevented from spreading rapidly in a short time; and there are a plurality of compartments in each zone, thereby improving the situation that a larger shelf space is required for providing fireproof partition plates in each compartment, and increasing the space utilization rate of the shelf.

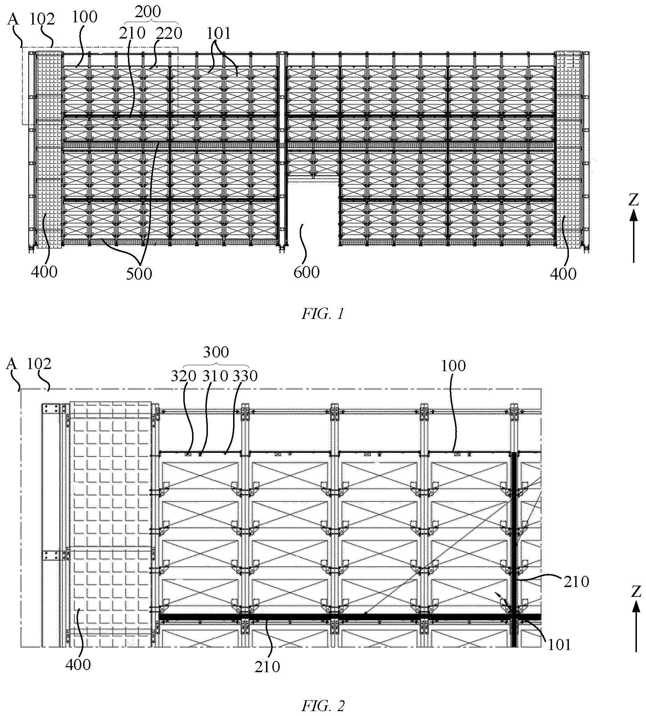

Referring to FIGS. 1 and 2, a warehousing system in an embodiment includes a shelf 100 and fireproof partition plates 200. The fireproof partition plates 200 are detachably arranged inside the shelf 100 and divide the interior of the shelf 100 into a plurality of zones 102, and each zone 102 has a plurality of compartments 101 therein.

It should be noted here that at least one pallet is provided in each compartment 101, and at least one material may be placed on each pallet. The material may be automatically placed on the pallet by a stacking machine so as to improve the storage efficiency of the material.

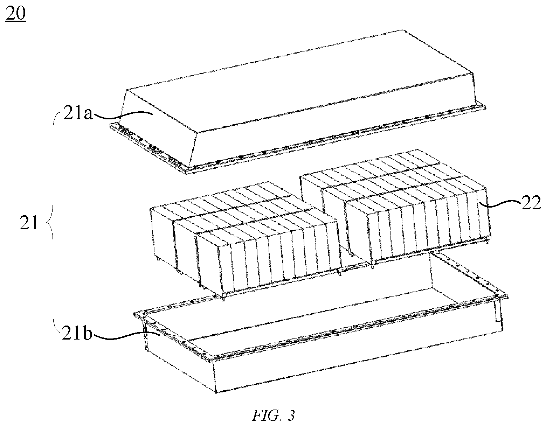

Optionally, the material is a lithium iron phosphate battery. For example, referring to FIG. 3, the lithium iron phosphate battery 20 includes a case 21 and battery cells 22, and the battery cells 22 are accommodated inside the case 21. The case 21 is configured to provide an accommodation space for the battery cells 22, and the case 21 may be of various structures. In some embodiments, the case 21 may include a first portion 21a and a second portion 21b. The first portion 21a and the second portion 21b are fitted to each other in a covered manner, and the first portion 21a and the second portion 21b jointly define the accommodation space for accommodating the battery cells 22. The second portion 21b may be of a hollow structure with one end open, the first portion 21a may be of a plate-like structure, and the first portion 21a covers an open side of the second portion 21b such that the first portion 21a and the second portion 21b jointly define the accommodation space; or both of the first portion 21a and the second portion 21b may be of a hollow structure with one side open, and an open side of the first portion 21a covers the open side of the second portion 21b. Of course, the case 21 formed by the first portion 21a and the second portion 21b may be in various forms, such as a cylinder and a cuboid.

A plurality of battery cells 22 may be provided. The plurality of battery cells 22 may be in series connection, in parallel connection, or in parallel-series connection. The parallel-series connection means that some of the plurality of battery cells 22 are connected in series and some are connected in parallel. The plurality of battery cells 22 may be directly connected to each other in series or in parallel or in series and parallel, and then the plurality of battery cells 22 as a whole are received in the case 21. Of course, the battery 20 may also be a unit received in the case 21 that is formed by firstly connecting a plurality of battery cells 22 in series or in parallel or in series and parallel to form a plurality of battery modules, and then connecting the plurality of battery modules in series or in parallel or in series and parallel. The battery cells 22 may each be in the form of a cylinder, a flat body, a cuboid, etc.

In some embodiments of the present application, a plurality of compartments 101 in the same zone plate 102 may be arranged in a rectangular array, or in a circular array or in other arrangement manners.

In some embodiments of the present application, the fireproof partition plates 200 are magnesium oxide boards, and the shelf 100 is made of steel, thereby effectively preventing fires while meeting the requirement of mechanical strength.

In the above-mentioned warehousing system, the fireproof partition plates 200 are detachably arranged inside the shelf 100, and the interior of the shelf 100 is divided into a plurality of zones 102. When a fire occurs in a certain zone 102, the fire can be prevented from spreading rapidly in a short time; and there are a plurality of compartments 101 in each zone 102, thereby improving the situation that a larger shelf 100 space is required for providing fireproof partition plates 200 in each compartment 101, and increasing the space utilization rate of the shelf 100.

According to some embodiments of the present application, referring to FIG. 1, the fireproof partition plates 200 include a plurality of first partition plates 210 and several second partition plates 220, all the second partition plates 220 are arranged on a back side of the shelf 100, and all the first partition plates 210 are distributed in a staggered manner in the shelf 100 to define a plurality of zones 102.

The shelf 100 here has a front side for loading and unloading materials, and the back side of the shelf 100 is located away from the side for loading and unloading materials.

In some embodiments of the present application, fastening of the first partition plates 210 to each other, of the first partition plates 210 to the shelf 100, and of the second partition plates 220 to the shelf 100 are implemented by screws or bolts, such that the partition plates 200 are detachable from the shelf 100.

In some embodiments of the present application, all the first partition plates 210 are distributed in the shelf 100 in a criss-cross manner. For example, as shown in FIG. 1, there are 16 compartments 101 in the zone 102 at the uppermost left corner of the shelf 100, the zone 102 includes two first partition plates 210 and one second partition plate 220 therein, the two first partition plates 210 are connected vertically and are each connected to the shelf 100, and the second partition plate 220 is arranged on the back side of the shelf 100, such that the front side of the zone 102 can be used for loading and unloading materials.

In some embodiments of the present application, all the first partition plates 210 and all the second partition plates 220 are in the from of a planar plate. In other embodiments, all the first partition plates 210 and all the second partition plates 220 may also be in the form of a curved plate or other forms.

With the above-described arrangement, all the first partition plates 210 are distributed in the shelf 100 in a staggered manner to define a plurality of zones 102, such that a fire can be prevented from spreading rapidly in a short time; and all the second partition plates 220 are arranged on the back side of the shelf 100, so as to enhance a fire-proof effect while meeting the mechanical strength.

According to some embodiments of the present application, referring to FIG. 1, a fire-resistant adhesive is applied at connections between the second partition plates 220 and the shelf 100 and connections between the first partition plates 210 and the shelf 100.

In some embodiments of the present application, the fire-resistant adhesive is a high temperature resistant adhesive. The fire-resistant adhesive may be evenly applied to the connections by a coating machine or a dot coating machine.

With the above-described arrangement, the connections between the second partition plates 220 and the shelf 100 and the connections between the first partition plates 210 and the shelf 100 are sealed by means of the fire-resistant adhesive, so as to ensure the airtightness of the compartments 101 in the zone 102 to achieve the effect of smoke prevention and reduce the interference with the zone 102 from other zones 102.

According to some embodiments of the present application, referring to FIGS. 1 and 2, a plurality of compartments 101 in the same zone 102 are arranged in a rectangular array, and all the compartments 101 in the same column share a fire extinguishing device 300 in a height direction of the shelf 100.

In some embodiments of the present application, the same zone 102 includes at least two columns of compartments 101, and each column includes at least two compartments 101. For example, as shown in FIG. 1, there are 16 compartments 101 in the zone 102 at the uppermost left corner of the shelf 100, and the 16 compartments 101 are arranged in 4 columns, and each column includes 4 compartments 101.

In some embodiments of the present application, all the compartments 101 have the same size and shape. In other embodiments, all the compartments 101 may have not exactly same size and shape or completely different sizes and shapes, and are flexibly configured according to actual needs.

With the above-described arrangement, when a material in a certain zone 102 catches a fire, the fire extinguishing device 300 can prevent the fire from spreading rapidly in a short time. All the compartments 101 in the same column share a fire extinguishing device 300, so it is unnecessary to provide a fire extinguishing device 300 for each compartment 101, thereby reducing the number of fire extinguishing devices 300 and the costs while effectively preventing fires.

According to some embodiments of the present application, referring to FIGS. 1 and 2, there are at least two compartments 101 in each column in the height direction of the shelf 100, and in the same column, the fire extinguishing device 300 is arranged in the compartment 101 at the highest position.

The height direction of the shelf 100 here is the Z direction shown in FIG. 1.

For example, as shown in FIGS. 1 and 2, there are 16 compartments 101 in the zone 102 at the uppermost left corner of the shelf 100, the 16 compartments 101 are arranged in 4 columns, each column includes 4 compartments 101, and the fire extinguishing device 300 is arranged in the compartment 101 at the highest position.

With the above-described arrangement, in the height direction of the shelf 100, the fire extinguishing device 300 is arranged in the highest compartment 101 in the same column, and the fire of each compartment 101 in the same column can be prevented by means of a fire extinguishing device 300, thereby optimizing the arrangement of the fire extinguishing device 300, and reducing the number of fire extinguishing devices 300 and further reducing the costs.

According to some embodiments of the present application, referring to FIGS. 1 and 2, the fire extinguishing device 300 includes a control unit, a sprinkler 310 and a smoke sensor 320 that are electrically connected. The smoke sensor 320 is configured to detect smoke and generate a corresponding smoke feedback signal, and the control unit controls the ON and OFF of the sprinkler 310 based on the smoke feedback signal.

When the smoke sensor 320 here detects smoke, it is indicated that there is a fire in the compartment 101 in the zone 102 at this time, and the control unit controls the sprinkler 310 to be switched on; and when the smoke sensor 320 detects no smoke, the control unit controls the sprinkler 310 to be switched off.

In some embodiments of the present application, one sprinkler 310 and one smoke sensor 320 are provided and are located in each compartment 101 of the same column, and the sprinkler 310 and the smoke sensor 320 are arranged at an interval in the compartment 101 at the highest position of the same column. In other embodiments, at least two sprinklers 310 and at least two smoke sensors 320 may also be provided.

In some embodiments of the present application, the smoke sensor 320 is a sensor with a single function of detecting smoke. In other embodiments, the smoke sensor 320 may be a multi-functional sensor for detecting smoke, humidity and other parameters.

With the above-described arrangement, when the smoke sensor 320 detects that there is a fire, the sprinkler 310 can be automatically switched on to extinguish the fire timely, so as to prevent the fire from spreading rapidly in a short time.

According to some embodiments of the present application, referring to FIG. 2, the fire extinguishing device 300 further includes a temperature sensor 330 electrically connected to the control unit. The temperature sensor 330 is configured to measure temperature and generate a corresponding temperature feedback signal, and the control unit controls the ON and OFF of the sprinkler 310 based on the temperature feedback signal.

For example, when the temperature sensor 330 detects that a real-time temperature is higher than a preset temperature value, the control unit controls the sprinkler 310 to be switched on; and when the temperature sensor 330 detects that the real-time temperature is equal to or lower than the preset temperature value, the control unit controls the sprinkler 310 to be switched off.

With the above-described arrangement, the control unit can control the ON and OFF of the sprinkler 310 based on the real-time temperature, achieving automatic control and facilitating energy saving.

According to some embodiments of the present application, referring to FIG. 1, the warehousing system further includes primary temperature control air ducts 400 and secondary temperature control air ducts 500 that are in communication with each other. The primary temperature control air ducts 400 are arranged on two opposite sides of the shelf 100, the primary temperature control air ducts 400 extend in the height direction of the shelf 100, and the secondary temperature control air ducts 500 are perpendicular to the primary temperature control air ducts 400.

The primary temperature control air ducts 400 are connected to an external temperature control device, and receive a temperature control airflow delivered by the external temperature control device. The temperature control airflow may be higher or lower than the temperature of each zone 102 of the shelf 100.

In some embodiments of the present application, the primary temperature control air ducts 400 and the secondary temperature control air ducts 500 are both straight and cylindrical. In other embodiments, the primary temperature control air ducts 400 and the secondary temperature control air ducts 500 may also be in the form of a corrugated cylinder or in other forms.

With the above-described arrangement, the temperature control airflow is diverted to each secondary temperature control air duct 500 by means of the primary temperature control air ducts 400, and then evenly distributed to each zone 102 of the shelf 100 by the secondary temperature control air ducts 500, which can effectively ensure the storage temperature of materials.

According to some embodiments of the present application, referring to FIG. 1, in the height direction of the shelf 100, the secondary temperature control air ducts 500 are located in the middle of the shelf 100 and at the bottom of the shelf 100.

In other embodiments, the secondary temperature control air ducts 500 here may also be located at the top of the shelf 100.

With the above-described arrangement, in the height direction of the shelf 100, the secondary temperature control air ducts 500 are located in the middle of the shelf 100 and at the bottom of the shelf 100, and it is unnecessary to provide a secondary temperature control air duct 500 at the top of the shelf 100. The demand for temperature control can be met by the primary temperature control air ducts 400 and the secondary temperature control air ducts 500, which further achieve energy saving.

According to some embodiments of the present application, referring to FIG. 1, a fire fighting access 600 is provided in the middle of the shelf 100 and/or on either side of the shelf 100, a fire exit door (not shown) is provided at the fire fighting access 600, and the control unit controls opening and closing of the fire exit door based on the smoke feedback signal and/or the temperature feedback signal.

For example, when the smoke sensor 320 detects smoke and/or the temperature sensor 330 detects that the real-time temperature is higher than the preset temperature value, the control unit controls the sprinkler 310 to be switched on and the fire exit door to be opened; and when the smoke sensor 320 detects no smoke and/or the temperature sensor 330 detects that the real-time temperature is equal to or lower than the preset temperature value, the control unit controls the sprinkler 310 to be switched off and the fire exit door to be closed.

It may be understood that if the shelf 100 is long, a fire fighting access 600 may be provided in the middle of the shelf 100 and on either side of the shelf 100; and if the shelf 100 is short, a fire fighting access 600 may be provided only in the middle of the shelf 100 or only on either side of the shelf 100.

With the above-described arrangement, in the case of a fire, personnel can quickly escape to a safe area through the fire fighting access 600.

According to some embodiments of the present application, referring to FIG. 1, the height of the fire fighting access 600 is less than the height of the shelf 100, and the width of the fire fighting access 600 is equal to the width of at least two compartments 101.

With the above-described arrangement, a width range of the shelf 100 is reduced as much as possible to avoid excess space occupation, provided that the fire protection requirements can be met.

According to some embodiments of the present application, referring to FIG. 1, each of the fireproof partition plates 200 includes a lining and a shell, the lining and/or the shell are made of a fireproof material, and the shell surrounds an outer periphery of the lining.

In some embodiments of the present application, the shell completely surrounds the outer periphery of the lining so as to prevent the lining from being exposed to the outside.

The above-described arrangement is beneficial to enhancing the fireproof performance of the fireproof partition plates.

According to some embodiments of the present application, referring to FIG. 1, the lining is a silicate plate, and the shell is made of iron.

It should be noted that in other embodiments, the lining may also be a fireproof plate made of other materials, and the shell may also be made of an alloy or other metal materials.

With the above-described arrangement, the fireproof partition plates have a better fireproof performance.

According to some embodiments of the present application, referring to FIGS. 1 and 2, the warehousing system in an embodiment includes a shelf 100, fireproof partition plates 200, fire extinguishing devices 300, primary temperature control air ducts 400, and secondary temperature control air ducts 500, and a plurality of compartments 101 are provided in the shelf 100. The fireproof partition plates 200 include a plurality of first partition plates 210 and a plurality of second partition plates 220. All the second partition plates 220 are arranged on the back side of the shelf 100, all the first partition plates 210 are distributed in the shelf 100 in a staggered manner to define a plurality of zones 102, and there are a plurality of compartments 101 in each zone 102. The plurality of compartments 101 in the same zone 102 are arranged in a rectangular array, and all the compartments 101 in the same column share a set of fire extinguishing devices 300 in the height direction of the shelf 100; and in the height direction of the shelf 100, there are at least two compartments 101 in each column, and in the same column, a fire extinguishing device 300 is arranged in the compartment 101 at the highest height. The fire extinguishing device 300 includes a control unit, a sprinkler 310, a smoke sensor 320 and a temperature sensor 330 that are electrically connected. The control unit controls the ON and OFF of the sprinkler 310 based on the smoke feedback signal and/or the temperature feedback signal.

The primary temperature control air ducts 400 are arranged on two opposite sides of the shelf 100, the primary temperature control air ducts 400 extend in the height direction of the shelf 100, and the secondary temperature control air ducts 500 are perpendicular to the primary temperature control air ducts 400. In the height direction of the shelf 100, the secondary temperature control air ducts 500 are located in the middle of the shelf 100 and at the bottom of the shelf 100. A fire fighting access 600 is provided in the middle of the shelf 100 and/or on either side of the shelf 100, a fire exit door is provided at the fire fighting access 600, and the control unit controls the opening and closing of the fire door based on the smoke feedback signal and/or temperature feedback signal. The height of the fire exit door 600 is less than the height of the shelf 100, and the width of the fire fighting access 600 is equal to the width of at least two compartments 101.

The various technical features of the above embodiments can be combined in any manner, and in order to simplify the description, not all possible combinations of the various technical features of the above embodiments are described. However, the technical features should be considered to be within the scope of the description in the specification, as long as there is no conflict between the combinations of the technical features.

The embodiments described above merely illustrate several implementations of the present application and are described relatively specifically and in detail, but should not be construed as limiting the patent scope of the present application. It should be noted that several variations and improvements may also be made by those of ordinary skill in the art without departing from the concept of the present application, and should fall within the scope of protection of the present application. Therefore, the scope of protection of the present application shall be defined by the appended claims.

## Claims

1. A warehousing system, **characterized by** comprising:
a shelf (100);
fireproof partition plates (200) detachably arranged inside the shelf 100 and dividing the interior of the shelf (100) into a plurality of zones (102), there being a plurality of compartments (101) in each zone (102).

2. The warehousing system according to claim 1, **characterized in that** the fireproof partition plates (200) comprise a plurality of first partition plates (210) and a plurality of second partition plates (220), all the second partition plates (220) are arranged on a back side of the shelf (100), and all the first partition plates (210) are distributed in the shelf (100) in a staggered manner to define a plurality of zones (102).

3. The warehousing system according to claim 2, **characterized in that** a fire-resistant adhesive is applied at connections between the second partition plates (220) and the shelf (100), and connections between the first partition plates (210) and the shelf (100).

4. The warehousing system according to any one of claims 1-3, **characterized in that** the plurality of compartments (101) in the same zone (102) are arranged in a rectangular array, and all the compartments (101) in a same column share a fire extinguishing device (300) in a height direction of the shelf (100).

5. The warehousing system according to claim 4, **characterized in that** in the height direction of the shelf (100), there are at least two compartments (101) in each column, and in the same column, the fire extinguishing device 300 is arranged in the compartment (101) at the highest height.

6. The warehousing system according to any one of claims 4-5, **characterized in that** the fire extinguishing device (300) comprises a control unit, a sprinkler (310) and a smoke sensor (320) that are electrically connected, the smoke sensor (320) being configured to detect smoke and generate a corresponding smoke feedback signal, and the control unit controlling the ON and OFF of the sprinkler (310) based on the smoke feedback signal.

7. The warehousing system according to claim 6, **characterized in that** the fire extinguishing device (300) further comprises a temperature sensor (330) electrically connected to the control unit, the temperature sensor (330) being configured to measure temperature and generate a corresponding temperature feedback signal, and the control unit controlling the ON and OFF of the sprinkler (310) based on the temperature feedback signal.

8. The warehousing system according to claim 7, **characterized in that** a fire fighting access (600) is provided in the middle of the shelf (100) and/or on either side of the shelf (100), a fire exit door is provided at the fire fighting access (600), and the control unit controls opening and closing of the fire exit door based on the smoke feedback signal and/or the temperature feedback signal.

9. The warehousing system according to any one of claims 6-8, **characterized in that** the warehousing system further comprises primary temperature control air ducts (400) and secondary temperature control air ducts (500), the primary temperature control air ducts (400) being arranged on two opposite sides of the shelf (100), the primary temperature control air ducts (400) extending in the height direction of the shelf (100), and the secondary temperature control air ducts (500) being perpendicular to the primary temperature control air ducts (400).

10. The warehousing system according to claim 9, **characterized in that** in the height direction of the shelf (100), the secondary temperature control air ducts (500) are located in the middle of the shelf (100) and at the bottom of the shelf (100).

11. The warehousing system according to any one of claims 1-10, **characterized in that** each of the fireproof partition plates (200) comprises a lining and a shell, the lining and/or the shell being made of a fireproof material, and the shell surrounding an outer periphery of the lining.

12. The warehousing system according to claim 11, **characterized in that** the lining is a silicate plate, and the shell is made of iron.
